# EUROPÄISCHE PATENTSCHRIFT

(11) **EP 2 359 201 B1**
(45) Veröffentlichungstag und Bekanntmachung des Hinweises auf die Patenterteilung: **24.06.2015**
(21) Anmeldenummer: 09760810.3
(22) Anmeldetag: 18.11.2009
(51) Int. Cl.: G05B 9/02

(54) **VERFAHREN ZUM BESTIMMEN EINER SICHERHEITSSTUFE UND SICHERHEITSMANAGER**
METHOD FOR DETERMINING A SECURITY STEP AND SECURITY MANAGER
PROCÉDÉ POUR DÉFINIR UN NIVEAU DE SÉCURITÉ ET GESTIONNAIRE DE SÉCURITÉ

(30) Priorität: 24.11.2008 DE 102008044018
(43) Veröffentlichungstag der Anmeldung: 24.08.2011
(73) Patentinhaber: Beckhoff Automation GmbH, 33415 Verl (DE)
(72) Erfinder: SACHS, Jens, 32469 Petershagen (DE); BECKMANN, Guido, 33415 Verl (DE)
(74) Vertreter: Patentanwaltskanzlei WILHELM & BECK
(86) Internationale Anmeldenummer: PCT/EP2009/065370
(87) Internationale Veröffentlichungsnummer: WO 2010/057908

(56) Entgegenhaltungen:
- WO-A1-2006/067121
- DE-A1-102004 020 994
- Pilz GmbH, Ostfildern (DE): "Wahrscheinlichkeitserkennung leicht gemacht" Service-Box des Online-Magazins CIC-web Bd. Ausgabe AUT 06/2005, 1. Juni 2005 (2005-06-01), XP002573656 Gefunden im Internet: URL:http://www.cicweb.de/index.cfm?pid=147 3&pk=66042> [gefunden am 2010-03-16] in der Anmeldung erwähnt

## Beschreibung

Die Erfindung betrifft ein Verfahren zum Bestimmen einer Sicherheitsstufe in einem Automatisierungsnetzwerk mit Teilnehmern und ein Automatisierungsnetzwerk mit einem Sicherheitsmanager.

Moderne Konzepte der Industrieautomation, d.h. der Steuerung und Überwachung von technischen Prozessen mithilfe von Software beruhen auf der Idee einer zentralen Steuerung mit verteilter Sensor-/ Aktorebene. Die Teilnehmer kommunizieren dabei untereinander und mit übergeordneten Systemen über industrielle lokale Netzwerke, im Weiteren auch als Automatisierungsnetzwerke bezeichnet. Die Automatisierungsnetzwerke sind in der Regel als sogenannte Master-Slave-Kommunikationsnetze ausgelegt, bei denen der Masterteilnehmer die Steuerungsebene und die Slaveteilnehmer die Sensor-/ Aktorebene bilden.

Eine wesentliche Anforderung in der Industrieautomation ist die Sicherheit. Es muss bei der Ausführung von Automatisierungsaufgaben sicher gestellt sein, dass vom Automatisierungsnetzwerk dann, wenn ein Teilnehmer ausfällt oder ein anderer Fehler auftritt, keine Gefahr für Mensch und Umwelt ausgeht. Um die Gefährdung durch ein Automatisierungsnetzwerk einstufen zu können, ist es Vorschrift, eine Gefahrenanalyse vorzunehmen. Gemäß der europäischen Norm EN1050 hat die Risikobeurteilung als eine Folge von logischen Schritten zu erfolgen, welche die systematische Untersuchung von Gefährdung erlaubt, die vom Automatisierungsnetzwerk bzw. den einzelnen Teilnehmern ausgehen. Auf der Grundlage der Gefahrenanalyse werden dann die technischen und organisatorischen Anforderungen an das Automatisierungsnetzwerk zur Gewährleistung einer ausreichenden Sicherheit festgelegt.

Die europäische Norm EN 954-1 "Sicherheit für Maschinen - Sicherheitsbezogene Teile von Steuerungen" hat sich dabei im Bereich der Maschinen- und Anlagensicherheit als internationaler Standard zur Durchführung einer Gefährdungsanalyse etabliert. Die Norm bezieht alle sicherheitsrelevanten Teilnehmer unabhängig vom Teilnehmertyp ein und unterteilt die sicherheitstechnische Leistungsfähigkeit in Kategorien. Ausgehend von der ermittelten Sicherheitskategorie wird dann die Steuerungsstruktur im Automatisierungsnetzwerk ausgelegt, um die Anforderungen an die Sicherheitsfunktionen und ein gefordertes Systemverhalten im Fehlerfall zu erreichen.

Um insbesondere auch programmierbaren elektronischen Steuerungssystemen in Bezug auf die Sicherheitsanforderungen gerecht zu werden, wurden in den letzten Jahren zusätzlich zur EN 954-1 weitere Normen verabschiedet. Für die Gefahrenanalyse in Automatisierungsnetzwerken sind insbesondere die Norm EN ISO13849-1 und IEC/EN 62061 relevant. Mit diesen beiden Normen erfolgt über den qualitativen Ansatz der Norm EN954-1 hinaus eine quantitative Betrachtung der Sicherheitsfunktionen.

Die Normen EN ISO 13849-1 und IEC/EN 62061 spezifizieren die zur Risikoreduzierung erforderliche sicherheitstechnische Leistungsfähigkeit von programmierbaren elektronischen Steuerungssystemen. Zur Unterteilung der sicherheitstechnischen Leistungsfähigkeit werden in den beiden Normen Sicherheitsstufen definiert. Hierzu werden alle Sicherheitsfunktionen des Automatisierungsnetzwerks mit allen an ihrer Ausführung beteiligten Teilnehmern betrachtet.

Die Sicherheitsstufe des Automatisierungsnetzwerks wird auf der Grundlage von sicherheitstechnischen Kenngrößen der an den Sicherheitsfunktionen beteiligten Teilnehmer bestimmt. Diese Kenngrößen sind dabei gemäß der Norm EN ISO13849-1 u. a. die mittlere Zeit für einen gefährlichen Ausfall (MTTF), der Diagnosedeckungsgrad (DC), die durchschnittliche Wahrscheinlichkeit eines gefährlichen Ausfalls je Stunde (PFH), die Gebrauchsdauer (T_{M}), die Anzahl von Zyklen, bei denen 10% einer Stichprobe der betrachteten verschleißbehafteten Teilnehmer gefährlich ausgefallen sind (B_{10d}), und der Ausfall aufgrund gemeinsamer Ursache (CCF). Neben diesen genannten sicherheitstechnischen Kenngrößen können noch weitere Parameter, auch betriebliche Gesichtspunkte wie die Anforderungsrate oder die Testrate der Sicherheitsfunktion Einfluss auf die Sicherheitsstufe haben.

Zum Bestimmen der Sicherheitsstufe eines Automatisierungsnetzwerkes ist ferner neben der Kenntnis der sicherheitstechnischen Kenngrößen aller an der Sicherheitsfunktion beteiligten Teilnehmer eine genaue Information über die logische Verknüpfung der Teilnehmer im Automatisierungsnetzwerk erforderlich.

Um die Gefährdung durch ein Automatisierungsnetzwerk zuverlässig einstufen zu können, sind aufwendige Berechnungen, z. B. mithilfe der Markov-Analyse notwendig. Darüber hinaus muss die Ausfallwahrscheinlichkeit einzelner Teilnehmer aufgrund unzureichender Daten teilweise geschätzt werden, was eine gesicherte Aussage schwierig macht. Die Bestimmung der Sicherheitsstufe im Automatisierungsnetzwerk stellt deshalb insbesondere kleine und mittelständische Unternehmen vor erhebliche Probleme.

In den letzten Jahren kamen vermehrt Sicherheitstools auf den Markt, wie z.B. der Safety-Kalkulator PAScal der Firma Pilz, Ostfildern und das Programm Safeexpert der Firma Sick, Weiskirch. Diese Sicherheitstools berechnen die Sicherheitsstufe von Sicherheitsfunktionen in Automatisierungsnetzwerken abhängig von den verwendeten Teilnehmern. Die teilnehmerspezifischen Sicherheitskenndaten werden dabei einer Software-Bibliothek entnommen. Die Struktur der Anlage, d.h. die daten- und ablaufspezifische Verknüpfung der Teilnehmer im Automatisierungsnetzwerk muss aber zusätzlich individuell eingegeben werden. Die Sicherheitstools verifizieren die berechnete Sicherheitsstufe mit der gemäß den Normen EN ISO13849-1 und EN/EC62061 erforderlichen Sicherheitsstufe und zeigen eventuellen Handlungsbedarf zur Verbesserung der Sicherheit im Automatisierungsnetzwerk auf.

Die Verwendung einer Software-Bibliothek zur Erfassung der teilnehmerspezifischen Sicherheitskenndaten macht es erförderlich, diese Bibliothek ständig zu aktualisieren, um bei der Sicherheitsberechnung neue Teilnehmer einbeziehen zu können bzw. in den Teilnehmern vorgenommenen Veränderungen berücksichtigen zu können. Ferner ist das Erfordernis, die daten- und ablaufspezifische Verknüpfung der Teilnehmer im Automatisierungsnetzwerk individuell in das Sicherheitstool einzugeben, zeitintensiv und auch fehleranfällig. In der Regel wird deshalb nur eine vereinfachte Betrachtung der Steuerungslogik im Automatisierungsnetzwerk bei der Bestimmung der Sicherheitsstufe durchgeführt. Bei einer Erweiterung oder Änderung des Automatisierungsnetzwerkes ist es außerdem erforderlich, die geänderte Struktur neu zu erfassen, um die aktuelle Sicherheitsstufe bestimmen zu können.

Aus der DE 103 18 837 A1 ist ein Netzwerk bekannt, bei dem daten- und ablauftechnische Verknüpfungen zwischen den Teilnehmern von einem Sicherheitsmanager selbsttätig ermittelt werden können.

Aus der EP 1 300 657 A2 und der DE 44 09 543 A1 sind Netzwerke bekannt, bei denen teilnehmerspezifische Kenndaten auch selbsttätig ermittelt werden können.

"Wahrscheinlichkeitsrechnung leicht gemacht" aus der Service-Box des Online-Magazins CIC-web (Online-Service der Henrich Publikationen GmbH), Ausgabe AUT 06/2005, S. 1-3 (http://www.cicweb.de/index.cfm?pid=1473&pk=66042#) zeigt ein Verfahren zum Bestimmen einer Sicherheitsstufe in einem Automatisierungsnetzwerk mit Teilnehmern, bei welchen die Sicherheitsstufe im Automatisierungsnetzwerk mithilfe einer Berechnungsvorschrift berechnet wird, welche die daten- und ablauftechnische Verknüpfung der Teilnehmer im Automatisierungsnetzwerk und die teilnehmerspezifischen Sicherheitskenndaten verbindet. Dieses Verfahren ist im Programm "Safety Calculator PAScal" der Firma PILZ verwirklicht.

Die WO 2006/067121 offenbart ein Verfahren zum Bestimmen des Sicherheitsniveaus in einem Automatisierungssystems, bei dem jeweils die aktuellen Sicherheitskenndaten der einzelnen Systemkomponenten bei der Berechnung der Sicherheitsstufe berücksichtigt werden. Die Berechnung selbst erfolgt dabei auf der Grundlage eines vorher festgelegten Sicherheitsmodells, das aus der Anlagenkonfiguration abgeleitet ist.

Aufgabe der vorliegenden Erfindung ist es, ein Verfahren zum Bestimmen der Sicherheitsstufe in einem Automatisierungsnetzwerk bzw. ein Automatisierungsnetzwerk bereit zu stellen, die auf einfache und zuverlässige Weise eine automatische Berechnung der Sicherheitsstufe, insbesondere auch bei weiteren Änderungen im Automatisierungsnetzwerk ermöglichen.

Diese Aufgabe wird durch ein Verfahren, gemäß Anspruch 1 und ein Automatisierungsnetzwerk gemäß Anspruch 6 gelöst. Bevorzugte Weiterbildungen sind in den abhängigen Ansprüchen angegeben.

Erfindungsgemäß werden zum Bestimmen einer Sicherheitsstufe in einem Automatisierungsnetzwerk mit Teilnehmern die datenund ablauftechnischen Verknüpfungen zwischen den Teilnehmern im Automatisierungsnetzwerk und die teilnehmerspezifischen Sicherheitskenndaten selbsttätig ermittelt. Die Sicherheitsstufe im Automatisierungsnetzwerk wird dann mithilfe einer Berechnungsvorschrift, die die ermittelten daten- und ablauftechnischen Verknüpfungen der Teilnehmer im Automatisierungsnetzwerk und die ermittelten teilnehmerspezifischen Sicherheitskenndaten verbindet, berechnet. Das Verfahren läuft dabei erfindungsgemäß auf einem Sicherheitsmanager ab, der ein Konfigurationserfassungsmodul zum Ermitteln der daten- und ablaufspezifischen Verknüpfung der Teilnehmer im Automatisierungsnetzwerk und ein Kenndatenerfassungsmodul zum Ermitteln von teilnehmerspezifischen Sicherheitskenndaten sowie ein Berechnungsmodul zum Ausführen der Berechnungsvorschrift umfasst.

Die erfindungsgemäße Vorgehensweise bei der Ermittlung einer Sicherheitsstufe in einem Automatisierungsnetzwerk bzw. der zugehörige Sicherheitsmanager ermöglichen ein automatisches Berechnen der Sicherheitsstufe. Insbesondere ist es nicht mehr notwendig, dass der Bediener die Struktur des Automatisierungsnetzwerkes analysiert und dann in das Berechnungsmodul eingibt. Ferner ermöglichen die erfindungsgemäße Vorgehensweise und der entsprechend ausgelegte Sicherheitsmanager auch Erweiterungen oder Änderungen im Automatisierungsnetzwerk selbstständig zu erfassen und bei der Berechnung der Sicherheitsstufe zu berücksichtigen.

Erfindungsgemäß werden die daten- und ablauftechnischen Verknüpfungen zwischen den Teilnehmern aus der vorgegebenen Konfiguration des Automatisierungsnetzwerkes zum Durchführen einer Automatisierungsaufgabe ermittelt. Die Konfiguration der Steuerungslogik zur Durchführung der Automatisierungsaufgabe enthält alle notwendigen daten- und ablauftechnischen Verknüpfungen, die bei der Berechnung der Sicherheitsstufe berücksichtigt werden müssen. Die daten- und ablauftechnischen Verknüpfungen lassen sich so auf einfache Weise automatisch aus der Steuerungshardware bestimmen.

Zum Ermitteln der daten- und ablaufspezifischen Verknüpfungen zwischen den Teilnehmern werden die logischen Verknüpfungen von Ein- und Ausgängen der Teilnehmer zum Durchführen der Automatisierungsaufgabe erfasst. Diese Information enthält alle notwendigen Daten, um bei der Berechnung der Sicherheitsstufe die daten- und ablauftechnischen Verknüpfungen der Teilnehmer vollständig berücksichtigen zu können.

Gemäß einer bevorzugten Ausführungsform sind die teilnehmerspezifischen Sicherheitskenndaten in den entsprechenden Teilnehmern hinterlegt und werden vom Sicherheitsmanager zum Berechnen der Sicherheitsstufe über eine Automatisierungsnetzwerkverbindung von den Teilnehmern automatisch abgefragt. Durch die Speicherung der teilnehmerspezifischen Sicherheitskenndaten direkt in den Teilnehmern und deren Online-Abfrage erübrigt sich eine aufwendige Aktualisierung einer Software-bibliothek. Das Berechnungsmodul im Sicherheitsmanager erhält die teilnehmerspezifischen Sicherheitskenndaten direkt von den Teilnehmern, sodass auch neue bzw. bisher unbekannte Teilnehmer auf einfache Weise mit einbezogen werden können. Es wird so gewährleistet, dass Änderungen und Erweiterungen der Sicherheitsfunktion oder ein Austausch von Teilnehmern im Automatisierungsnetzwerk zuverlässig bei der Bestimmung der Sicherheitsstufe berücksichtigt werden.

Die Erfindung wird anhand der beigefügten Zeichnungen näher erläutert.

Es zeigen
Figur 1 schematisch ein Automatisierungsnetzwerk mit einem Sicherheitsbereich; und
Figur 2 einen Sicherheitsmanager für ein Automatisierungssystem.

In der Industrieautomation, d. h. der Steuerung und Überwachung von technischen Prozessen mithilfe von Software auf Rechnern, werden zunehmend dezentrale Steuerungen im Weiteren auch als Automatisierungsnetzwerke bezeichnet, eingesetzt, bei denen dezentral angeordnete Geräte in einer Sensor-/ Aktorebene wie E-A-Module, Messwerterfasser, Ventile über ein leistungsfähiges Echtzeitkommunikationsnetz mit Automatisierungsrechnern einer Steuerungsebene kommunizieren. Die Teilnehmer im Automatisierungsnetzwerk, d. h. die Automatisierungsrechner bzw. die Geräte der Sensor-/ Aktorebene, können über Punkt-zu-Punkt-Verbindungen oder über ein Bussystem miteinander verknüpft sein. Als Bussystem wird dabei vorzugsweise ein Feldbussystem eingesetzt.

Automatisierungsnetzwerke sind in der Regel hierarchisch aufgebaut und arbeiten nach dem Master-Slave-Prinzip. Die Masterteilnehmer sind der Steuerungsebene zugeordnet und stellen die aktiven Teilnehmer dar, die eine Zugriffsberechtigung auf die Kommunikationsverbindungen im Automatisierungsnetzwerk haben und den Datentransfer bestimmen. Die Slaveteilnehmer werden der Sensor-/ Aktorebene zugerechnet und bilden die passiven Teilnehmer. Sie haben keine eigenständige Zugriffsberechtigung auf die Kommunikationsverbindungen, d. h. sie dürfen empfangene Daten nur quittieren und auf Anfrage eines Masterteilnehmers Daten an diesen übermitteln.

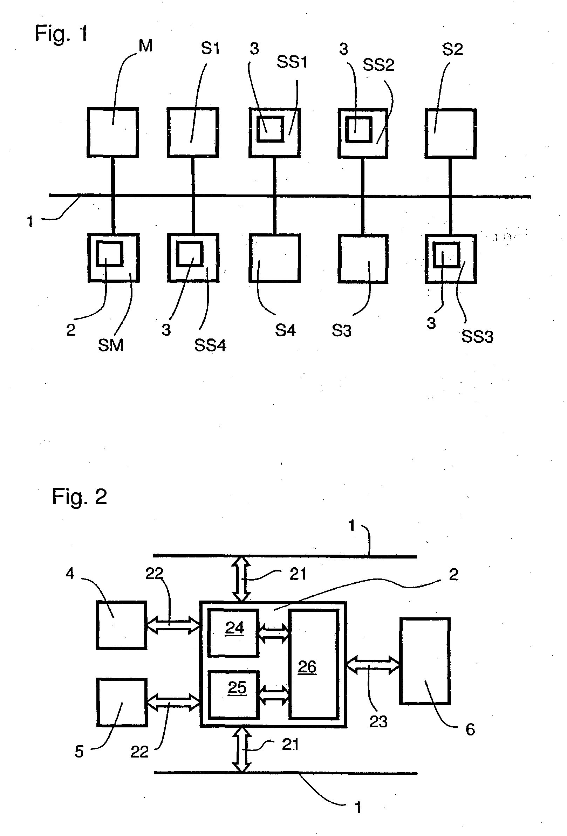

In Figur 1 ist schematisch die Grundstruktur eines Automatisierungsnetzwerks dargestellt. Das Automatisierungsnetzwerk weist auf zwei Master-Teilnehmer M, SM, die die Steuerungsebene bilden, und acht Slaveteilnehmer S₁ bis S₄, SS₁ bis SS₄, die die Sensor-/ Aktorebene repräsentieren. Alle Teilnehmer im Automatisierungsnetzwerk sind über einen seriellen Bus 1 miteinander verbunden, über den der Datenaustausch zwischen den Teilnehmern stattfindet. Der Datenaustausch zwischen den Teilnehmern wird von den Masterteilnehmern M, SM in der Regel in Form von Datenpaketen organisiert, die sich aus Steuerdaten und Nutzdaten zusammensetzen, wobei die Steuerdaten im Datenpaket eine Adresseninformation enthalten. Der Datenaustausch erfolgt dann z. B. auf der Grundlage des Ethernet-Protokolls, das Datenpakete mit einer Länge von bis zu 1500 Bytes bei Übertragungsgeschwindigkeiten von 100 Mbit/sec erlaubt.

Eine wesentliche Anforderung an das Automatisierungsnetzwerk ist, sicherzustellen, dass bei, einem Ausfall eines Teilnehmers bzw. bei einer Fehlfunktion keine Gefahr für Mensch und Umwelt ausgehen. Dabei hängt die Gefährdung wesentlich von der Art und Funktionsweise der Teilnehmer am Automatisierungsnetzwerk und der Zuverlässigkeit der Steuerungsprogramme ab. Um die Menschen bzw. die Umwelt vor Gefahren zu schützen, dürfen gefahrvolle Teilnehmer im Automatisierungsnetzwerk nur mit geeigneten Schutzeinrichtungen betrieben und gewartet werden. Weiterhin müssen auf der Steuerungsebene im Automatisierungsnetzwerk neben den normalen Steuerungsfunktionen noch Sicherheitsfunktionen ausgeführt werden, die bei Ausfall sicherheitsrelevanter Teilnehmer im Automatisierungsnetzwerk gewährleisten, dass das Automatisierungsnetzwerk in einen sicheren Zustand übergeht. Ein solcher sicherer Zustand ist z. B. eine Notausschaltung des Automatisierungsnetzwerks.

Um die Gefahr, die von den Teilnehmern eines Automatisierungsnetzwerks bzw. dem Steuerprogramm ausgehen, einstufen zu können, ist es Vorschrift, eine Gefahrenanalyse durchzuführen. Es existieren mehrere Normen, die Anforderungen und Empfehlungen für den Entwurf, die Integration und Validierung von sicherheitsbezogenen Automatisierungsnetzwerken enthalten. Standardnorm ist dabei die Europäische Norm EN 954-1 "Sicherheit von Maschinen - sicherheitsbezogene Teile von Steuerungen", die für alle sicherheitsbezogenen Teile von Steuerungen unabhängig von der verwendeten Energieart gilt und Kategorien zur Einteilung der jeweils erforderlichen sicherheitstechnischen Leistungsfähigkeit enthält. Die europäische Norm EN 954-1 führt jedoch nur einen qualitativen Ansatz aus, wobei z. B. die Ausfallwahrscheinlichkeiten einzelner Teilnehmer im Automatisierungsnetzwerk nicht berücksichtigt werden.

Eine solche quantitative Betrachtung, die eine zuverlässige Gefährdungsbeurteilung insbesondere auch von Automatisierungsnetzwerken ermöglicht, ist in den neueren Normen EN ISO 13849-1 und IEC/EN 62061 enthalten. In diesen Normen werden zur Einteilung unterschiedlicher sicherheitstechnischer Leistungsfähigkeit Sicherheitsstufen definiert, die für unterschiedliche durchschnittliche Wahrscheinlichkeitswerte eines gefährlichen Ausfalls des Automatisierungsnetzwerks pro Stunde stehen. Zur Ermittlung der Sicherheitsstufe gemäß den Normen EN ISO 13849-1 und IEC/EN 62061 ist es erforderlich, die teilnehmerspezifischen Sicherheitskenndaten zu ermitteln. Solche Sicherheitskenndaten der Teilnehmer sind die mittlere Zeit bis zu einem gefährlichen Ausfall (MTTF_{d}), die Wahrscheinlichkeit gefährlicher Ausfälle pro Stunde (PFH_{d}), der Diagnosedeckungsgrad (DC_{d}), der Anteil sicherer Ausfälle (SFF_{d}), die Gebrauchsdauer (T_{M}), der Ausfall aufgrund gemeinsamer Ursachen (CCF) sowie weitere in den Normen spezifizierte Kenngrößen.

Neben den teilnehmerspezifischen Sicherheitskenndaten ist zur Bestimmung der Sicherheitsstufe des Automatisierüngsnetzwerkes weiter erforderlich, die daten- und ablaufspezifische. Verknüpfung der Teilnehmer im Automatisierungsnetzwerk zu erfassen. Mithilfe der durch die Normen vorgegebenen Rechnungsvorschriften lässt sich dann die Sicherheitsstufe ermitteln.

Im Allgemeinen sind nicht alle Teilnehmer im Automatisierungsnetzwerk sicherheitsrelevant. Auch ist die Anzahl der Sicherheitsfunktionen in einem Automatisierungsnetzwerk in der Regel niedriger als die Anzahl der nicht sicherheitsrelevanten Steuerungsfunktionen. Im Automatisierungsnetzwerk wird deshalb in der Regel ein Sicherheitsbereich festgelegt. Bei dem in Figur 1 dargestellten Automatisierungsnetzwerk wird der Sicherheitsbereich durch den sicherheitsrelevanten Masterteilnehmer SM, im Weiteren auch als Sicherheitsmaster SM bezeichnet, und die sicherheitsrelevanten Slaveteilnehmer SS₁ bis SS₄ gebildet. Die bei den in Figur 1 dargestellten Automatisierungsnetzwerk weiter vorhandenen nicht sicherheitsrelevanten Slaveteilnehmer S₁ bis S₄ werden von dem zweiten Masterteilnehmer M, im Weiteren auch als Standardmaster M bezeichnet, gesteuert.

Statt, wie bei dem in Figur 1 dargestellten Automatisierungsnetzwerk vorgesehen, die Sicherheitsfunktionen von den nicht sicherheitsrelevanten Steuerungsfunktionen durch Vorsehen separater Masterteilnehmer zu trennen, besteht auch die Möglichkeit, auf einem einzelnen Masterteilnehmer sowohl die Sicherungsfunktionen als auch die nicht sicherheitsrelevanten Steuerungsfunktionen auszuführen, wobei dann jedoch gewährleistet sein muss, dass die nicht sicherheitsrelevanten Steuerfunktionen die Sicherheitsfunktionen nicht beeinträchtigen.

Bei den bekannten Sicherheitstools, mit denen sich die Sicherheitsstufe in einem Automatisierungsnetzwerk normenkonform bestimmen lässt, ist es erforderlich, die daten- und ablauftechnische Verknüpfung der Teilnehmer zur Ausführung der Sicherheitsfunktionen im Automatisierungsnetzwerk jeweils individuell einzugeben. Ferner werden bei den bekannten Sicherheitstools die bei Berechnung der Sicherheitsstufe zu berücksichtigenden teilnehmerspezifischen Sicherheitskenndaten aus einer Software-Bibliothek entnommen. Dies macht es erforderlich, die Software-Bibliothek fortlaufend zu aktualisieren, um neue sicherheitsrelevante Teilnehmer berücksichtigen zu können bzw. Änderungen der teilnehmerspezifischen Sicherheitskenndaten aufgrund technischer oder Softwarespezifischer Anpassungen in den Teilnehmern zu erfassen. Der Aufwand zur Bestimmung der Sicherheitsstufe in einem Automatisierungsnetzwerk wird mit dem erfindungsgemäß vorgesehenen Sicherheitsmanager 2 wesentlich reduziert.

Der Sicherheitsmanager 2 ist bei dem in Figur 1 dargestellten Automatisierungsnetzwerk im Sicherheitsmaster SM integriert. Der Sicherheitsmanager 2 kann dabei sowohl in Hard- als auch in Software-Form ausgebildet sein. Alternativ zu der in Figur 1 gezeigten Ausführungsform kann der Sicherheitsmanager 2 auch in einem beliebigen anderen Teilnehmer am Automatisierungsnetzwerk, z. B. dem Standardmaster M vorgesehen sein. Der Sicherheitsmanager 2 kann aber auch als eigenständiger Teilnehmer am Automatisierungsnetzwerk ausgebildet werden.

Der Aufbau des Sicherheitsmanagers 2 ist schematisch in Figur 2 dargestellt. Die einzelnen Komponenten des Sicherheitsmanagers können wiederum sowohl in Hard- als auch in Software ausgeführt werden. Der Sicherheitsmanager 2 weist drei Schnittstellen auf: eine Busschnittstelle 21 zur Anbindung des Sicherheitsmanagers an das Automatisierungssystem, eine Datenschnittstelle 22 und eine Mensch-Maschinen-Schnittstelle 23. Wenn der Sicherheitsmanager 2 kein eigenständiger Teilnehmer am Automatisierungsnetzwerk ist, sondern Teil eines Masterteilnehmers oder eines anderen Teilnehmers am Netzwerk, kann der Sicherheitsmanager auch alternativ die entsprechenden Schnittstellen dieses Host-Teilnehmers nutzen.

Über die Datenschnittstelle 22 kann der Sicherheitsmanager 2 die Automatisierungsnetzwerkkonfiguration, die z. B. von einem Konfigurationstools 4 zur Durchführung einer Automatisierungsaufgabe festgelegt wurde, importieren. Die eingelesene Anlagenkonfiguration wird in einem an die Datenschnittstelle 22 angeschlossenen Konfigurationserfassungsmodul 24 in ein Anlagenmodell umgewandelt, das in standardisierter Form die daten- und ablauftechnische Verknüpfung der sicherheitsrelevanten Teilnehmer im Automatisierungsnetzwerk ermittelt. Das Konfigurationserfassungsmodul 24 kann das Anlagenmodell, das die daten- und ablauftechnischen Verknüpfungen der sicherheitsrelevanten Teilnehmer im Automatisierungsnetzwerk wiedergibt, aber auch alternativ in einem Testmodus des Automatisierungsnetzwerks selbst erfassen. Hierzu ermittelt das Konfigurationserfassungsmodul 24, z. B. mithilfe von Testdaten, die logische Verknüpfung von Ein- und Ausgängen der sicherheitsrelevanten Teilnehmer bei der Durchführung der Automatisierungsaufgabe. Ferner besteht auch die Möglichkeit, dass das Konfigurationserfassungsmodul 24 die Sicherheitssteuerung aus dem Sicherheitsmaster SM ausliest und daraus die daten- und ablaufspezifische Verknüpfung der sicherheitsrelevanten Teilnehmer ermittelt.

Der Sicherheitsmanager 2 weist ferner ein Kenndatenerfassungsmodul 25 zum Ermitteln der teilnehmerspezifischen Sicherheitskenndaten auf. Diese teilnehmerspezifischen Sicherheitskenndaten kann das Kenndatenerfassungsmodul 25 über die Datenschnittstelle 22 von einer externen Datenbank 5 einlesen oder auch über die Busschnittstelle 21 direkt von den sicherheitsrelevanten Teilnehmern im Automatisierungsnetzwerk abfragen. Weiterhin besteht die Möglichkeit, dass das Kenndatenerfassungsmodul 25 aktualisierte teilnehmerspezifische Sicherheitskenndaten in die sicherheitsrelevanten Teilnehmer bzw. externen Datenbank 5 zurückspeichert.

Jeder sicherheitsrelevante Teilnehmer SS₁ bis SS₄ weist, wie in Figur 1 dargestellt, einen Kenndatenspeicher 3 auf, indem die teilnehmerspezifischen Sicherheitskenndaten abgespeichert sind. Dieser Kenndatenspeicher 3 ist schreibgeschützt und mit einer Kennung versehen. Als Kennung kann z. B. die Prüfsumme der teilnehmerspezifischen Kenndaten verwendet werden. Die den einzelnen Kenndatenspeichern zugeordnete Kennung ist ferner im Kenndatenerfassungsmodul 25 abgespeichert. Mithilfe dieser Kennungen kann eine sichere Datenkommunikation zwischen dem Kenndatenerfassungsmodul 25 und den einzelnen Teilnehmern im Automatisierungsnetzwerk zum Austausch der teilnehmerspezifischen Sicherheitskenndaten durchgeführt werden.

Das Konfigurationserfassungsmodul 24 und das Kenndatenerfassungsmodul 25 sind im Sicherheitsmanager 2 weiter mit einem Berechnungsmodul 26 verbunden, um eine Sicherheitsstufe im Automatisierungsnetzwerk zu berechnen. Das Berechnungsmodul 26 führt die Bestimmung der Sicherheitsstufe mithilfe vorgegebener Berechnungsvorschriften durch, wobei die Berechnungsvorschriften die vorgegebenen Sicherheitsnormen berücksichtigen. Die jeweils zu verwendende Berechnungsvorschrift kann dabei über die Mensch-Maschinen-Schnittstelle 23 vom Benutzer über eine angeschlossene Eingabe-/ Wiedergabeeinheit 6 ausgewählt werden. Es besteht aber auch die Möglichkeit, dem Berechnungsmodul 26 die zu verwendende Berechnungsvorschrift automatisch vorzugeben. Die ermittelte Sicherheitsstufe gibt das Berechnungsmodul wiederum über die Mensch-Maschinen-Schnittstelle 23 in Form einer Meldung an die Eingabe-/ Wiedergabeeinheit 6 aus.

Der Sicherheitsmanager 2 kann zur Berechnung der Sicherheitsstufe im Automatisierungsnetzwerk in verschiedene Modi betrieben werden. So kann der Sicherheitsmanager 2 in einem ersten Betriebsmodus im Rahmen des Anlagenentwurfs zur Vorabbestimmung der jeweiligen Sicherheitsstufe des Entwurfes eingesetzt werden. Hierbei werden dann die Anlagenkonfiguration und die teilnehmerspezifischen Sicherheitskenndaten über die Datenschnittstelle 22 von Konfigurationstools 4 bzw. der externen Datenbank 5 abgefragt.

Bei Betrieb des Automatisierungssystems besteht die Möglichkeit in einem zweiten Betriebsmodus des Sicherheitsmanagers 2 die Sicherheitsstufe periodisch oder z. B. bei der Initialisierung des Automatisierungsnetzwerks neu zu berechnen. In diesem Sicherheitsmanager-Betriebsmodus kann dann das Kenndatenerfassungsmodul 25 die teilnehmerspezifischen Kenndaten aus den Kenndatenspeichern 3 der sicherheitsrelevanten Teilnehmer auslesen. Das Konfigurationserfassungsmodul 24 kann ferner direkt aus der Konfiguration des angeschlossenen Automatisierungsnetzwerks bzw. aus dem Steuerungsprogramm des Sicherheitsmasters die daten- und ablaufspezifische Konfiguration ermitteln.

Mit dem erfindungsgemäßen Sicherheitsmanager bzw. dem erfindungsgemäßen Sicherheitsstufen-Bestimmungsverfahren besteht die Möglichkeit, auf einfache Weise automatisch die Sicherheitsstufe im Automatisierungsnetzwerk zu ermitteln, insbesondere auch nach Änderungen im Automatisierungsnetzwerk, z. B. nach dem Anschließen eines weiteren sicherheitsrelevanten Teilnehmers.

## Patentansprüche

1. Verfahren zum Bestimmen einer Sicherheitsstufe in einem Automatisierungsnetzwerk mit einer Mehrzahl von sicherheitsrelevanten Teilnehmern,
mit den Schritten:
selbsttätiges Ermitteln der daten- und ablauftechnischen Verknüpfungen zwischen den sicherheitsrelevanten Teilnehmer des Automatisierungsnetzwerks durch ein Konfigurationserfassungsmodul (24) aus der vorgegebenen Automatisierungsnetzwerkkonfiguration, wobei die logischen Verknüpfungen von Eingängen und Ausgängen in den sicherheitsrelevanten Teilnehmer zum Durchführen der Sicherheitsfunktionen automatisch erfasst werden;
Ermitteln der teilnehmerspezifischen Sicherheitskenndaten der sicherheitsrelevanten Teilnehmer selbsttätig durch ein Kenndatenerfassungsmodul (25); und
Berechnen der Sicherheitsstufe in dem Automatisierungsnetzwerk mithilfe einer Berechnungsvorschrift, die die ermittelten daten- und ablauftechnischen Verknüpfungen der sicherheitsrelevanten Teilnehmer des Automatisierungsnetzwerks und die ermittelten teilnehmerspezifischen Sicherheitskenndaten der sicherheitsrelevanten Teilnehmer verbindet.

2. Verfahren nach Anspruch 1, wobei die Berechnungsvorschrift eine sicherheitsrelevante Norm berücksichtigt.

3. Verfahren nach Anspruch 1 oder 2 , wobei die teilnehmerspezifischen Sicherheitskenndaten in den entsprechenden Teilnehmer hinterlegt sind und von den Teilnehmer durch das Kenndatenerfassungsmodul (25) abgefragt werden.

4. Computerprogrammprodukt mit Programmcodemitteln zur Durchführung eines Verfahrens nach einem der vorangehenden Ansprüche, wenn das Computerprogrammprodukt auf einer Verarbeitungseinheit abläuft.

5. Computerprogrammprodukt nach Anspruch 3, wenn es auf einem computerlesbaren Datenträger gespeichert ist.

6. Automatisierungsnetzwerk mit einem Sicherheitsmanager (2) und einer Mehrzahl von sicherheitsrelevanten Teilnehmern wobei der Sicherheitsmanager
ein Konfigurationserfassungsmodul (24) zum selbsttätigen Ermitteln der daten- und ablauftechnischen Verknüpfungen der sicherheitsrelevanten Teilnehmer des Automatisierungsnetzwerks aus der vorgegebenen Automatisierungsnetzwerkkonfiguration, wobei das Konfigurationserfassungsmodul (24) ausgelegt ist, die logische Verknüpfungen von Eingängen und Ausgängen in den sicherheitsrelevanten Teilnehmer zum Durchführen der Sicherheitsfunktionen automatisch zu erfassen,
ein Kenndatenerfassungsmodul (25) zum selbsttätigen Ermitteln von teilnehmerspezifischen Sicherheitskenndaten der sicherheitsrelevanten Teilnehmer, und ein Berechnungsmodul (26) zum Berechnen der Sicherheitsstufe des Automatisierungsnetzwerkes mithilfe einer Berechnungsvorschrift, die die ermittelten daten- und ablauftechnischen Verknüpfungen der sicherheitsrelevanten Teilnehmer im Automatisierungsnetzwerk und die ermittelten teilnehmerspezifischen Sicherheitskenndaten verbindet, aufweist.

7. Automatisierungsnetzwerk nach Anspruch 6, wobei die sicherheitsrelevanten Teilnehmer einen Kenndatenspeicher (3) aufweisen, in dem zugeordnete teilnehmerspezifische Sicherheitskenndaten gespeichert sind, wobei die sicherheitsrelevanten Teilnehmer ausgelegt sind, die Sicherheitskenndaten bei einer Abfrage an das Kenndatenerfassungsmodul (25) des Sicherheitsmanagers zu übermitteln.

## Claims

1. Method for determining a safety level in an automation network having a plurality of safety-relevant subscribers,
having the steps of:
automatic ascertainment of the data-oriented and flow-oriented links between the safety-relevant subscribers of the automation network by a configuration capture module (24) from the prescribed automation network configuration, wherein the logic combinations of inputs and outputs in the safety-relevant subscribers for performing the safety functions are captured automatically;
ascertainment of the subscriber-specific safety characteristic data of the safety-relevant subscribers automatically by a characteristic data capture module (25); and
computation of the safety level in the automation network using a computation code that connects the ascertained data-oriented and flow-oriented links between the safety-relevant subscribers of the automation network and the ascertained subscriber-specific safety characteristic data of the safety-relevant subscribers.

2. Method according to Claim 1, wherein the computation code takes account of a safety-relevant standard.

3. Method according to Claim 1 or 2, wherein the subscriber-specific safety characteristic data are stored in the relevant subscribers and are requested from the subscribers by the characteristic data capture module (25).

4. Computer program product having program code means for performing a method according to one of the preceding claims when the computer program product runs on a processing unit.

5. Computer program product according to Claim 3, when it is stored on a computer-readable data storage medium.

6. Automation network having a safety manager (2) and a plurality of safety-relevant subscribers, wherein the safety manager has
a configuration capture module (24) for automatically ascertaining the data-oriented and flow-oriented links between the safety-relevant subscribers of the automation network from the prescribed automation network configuration, wherein the configuration capture module (24) is designed to automatically capture the logic combinations of inputs and outputs in the safety-relevant subscribers for performing the safety functions,
a characteristic data capture module (25) for automatically ascertaining subscriber-specific safety characteristic data of the safety-relevant subscribers, and
a computation module (26) for computing the safety level of the automation network using a computation code that connects the ascertained data-oriented and flow-oriented links between the safety-relevant subscribers in the automation network and the ascertained subscriber-specific safety characteristic data.

7. Automation network according to Claim 6, wherein the safety-relevant subscribers have a characteristic data memory (3) that stores associated subscriber-specific safety characteristic data, wherein the safety-relevant subscribers are designed to transmit the safety characteristic data to the characteristic data capture module (25) of the safety manager in the event of a request.

## Revendications

1. Procédé de détermination d'un niveau de sécurité dans un réseau d'automatisation présentant plusieurs participants intervenant dans la sécurité, le procédé présentant les étapes qui consistent à :
à l'aide d'un module (24) de saisie de configuration constitué de la configuration prédéterminée du réseau d'automatisation, déterminer automatiquement les liaisons techniques de données et de déroulement entre les participants intervenant dans la sécurité du réseau d'automatisation, les liaisons logiques d'entrées et de sorties des participants intervenant dans la sécurité étant saisies automatiquement en vue d'exécuter les fonctions de sécurité,
à l'aide d'un module (25) de saisie de données caractéristiques, déterminer automatiquement les données caractéristiques de sécurité spécifiques aux participants intervenant dans la sécurité et
calculer le niveau de sécurité du réseau d'automatisation au moyen d'une prescription de calcul qui relie les liaisons techniques de données et de déroulement déterminées pour les participants intervenant dans la sécurité du réseau d'automatisation et les données de sécurité spécifiques aux participants et déterminées pour les participants intervenant dans la sécurité.

2. Procédé selon la revendication 1, dans lequel la prescription de calcul tient compte d'une norme intervenant dans la sécurité.

3. Procédé selon les revendications 1 ou 2, dans lequel les données caractéristiques de sécurité spécifiques aux participants sont conservées en mémoire chez les participants concernés et sont demandées aux participants par le module (25) de saisie de données caractéristiques.

4. Produit de programme informatique doté de moyens de code de programme permettant la mise en oeuvre d'un procédé selon l'une des revendications précédentes lorsque le produit de programme informatique est exécuté sur une unité de traitement.

5. Produit de programme informatique selon la revendication 3, conservé en mémoire sur un support de données lisibles par ordinateur.

6. Réseau d'automatisation doté d'un gestionnaire de sécurité (2) et de plusieurs participants intervenant dans la sécurité, et dans lequel le gestionnaire présente
un module (24) de saisie de configuration qui détermine automatiquement les liaisons techniques de données et de déroulement des participants intervenant dans la sécurité du réseau d'automatisation à partir d'une configuration du réseau d'automatisation prédéterminée, le module (24) de saisie de configuration étant conçu pour saisir les liaisons logiques des entrées et des sorties des participants intervenant dans la sécurité en vue d'exécuter automatiquement les fonctions de sécurité,
un module (25) de saisie de données caractéristiques qui détermine automatiquement les données caractéristiques de sécurité spécifiques aux participants intervenant dans la sécurité et
un module de calcul (26) qui calcule le niveau de sécurité du réseau d'automatisation à l'aide d'une prescription de calcul qui relie les liaisons techniques de données et de déroulement déterminées pour les participants intervenant dans la sécurité du réseau d'automatisation et les données caractéristiques de sécurité spécifiques aux participants qui ont été déterminées.

7. Réseau d'automatisation selon la revendication 6, dans lequel les participants intervenant dans la sécurité présentent une mémoire (3) à données caractéristiques dans laquelle des données caractéristiques de sécurité spécifiques aux participants concernés sont conservées, les participants intervenant dans la sécurité étant conçus pour, lors d'une demande, transmettre les données caractéristiques de sécurité au module (25) de saisie de données caractéristiques du gestionnaire de sécurité.
